Europäisches Patentamt

European Patent Office

Office européen des brevets

(11) Numéro de publication : **0 178 279**
**B1**

(12) FASCICULE DE BREVET EUROPÉEN

(45) Date de publication du fascicule du brevet :
09.11.88

(51) Int. Cl.⁴ : **G 01 T 1/11, G 01 V 5/02**

(21) Numéro de dépôt : **85870109.7**

(22) Date de dépôt : **09.08.85**

(54) Procédé de prospection de gisements radioactifs par thermoluminescence.

(30) Priorité : **10.08.84 LU 85493**

(43) Date de publication de la demande :
**16.04.86 Bulletin 86/16**

(45) Mention de la délivrance du brevet :
**09.11.88 Bulletin 88/45**

(84) Etats contractants désignés :
**BE DE FR GB IT**

(56) Documents cités :
**US-A- 2 573 245**
**US-A- 2 899 558**
**US-A- 3 962 586**
**US-A- 4 220 856**
**US-A- 4 267 445**

(73) Titulaire : **L'Etat belge, représenté par le Directeur Général des Services de Programmation de la Politique Scientifique**
**8 rue de la Science**
**B-1040 Bruxelles (BE)**

(72) Inventeur : **Blave, Arthur**
**158 rue du Marais**
**B-7071 La Louvière (Houdeng Aimeries) (BE)**
Inventeur : **Quinif, Yves**
**rue des Ecaussinnes 87**
**B-7078 Le Roeulx (BE)**
Inventeur : **Charlet, Jean-Marie**
**Boulevard Albert Elisabeth 34 boîte 4**
**B-7000 Mons (BE)**
Inventeur : **Lair Philippe**
**rue du Château 1**
**B-7040 Havre (BE)**

(74) Mandataire : **Vanderperre, Robert et al**
**Bureau VANDER HAEGHEN 63 Avenue de la Toison d'Or**
**B-1060 Bruxelles (BE)**

## Description

La présente invention concerne un procédé pour la prospection de gisements radioactifs et des éléments minéraux qui leur sont associés par analyse des émissions de thermoluminescence des minéraux des roches qui environnent ces gisements.

Le procédé généralement utilisé pour la prospection des gisements radioactifs cachés est basé sur la détection dans le sol du radon, gaz radioactif issu de la désintégration de l'uranium. Plusieurs techniques d'application de ce procédé sont connues et une des techniques les plus utilisées (Track Etch) consiste à implanter des détecteurs en matière plastique sensible aux rayons alpha émis au cours de la désintégration du radon, répartis régulièrement sur la zone prospectée et à les récupérer ensuite pour traitement chimique et mesure, après un laps de temps nécessaire à l'intégration du flux radon. Une autre technique consiste à implanter des détecteurs au charbon actif ou des alpha cards, à les récupérer ensuite après un laps de temps nécessaire à l'intégration et à doser les descendants solides du radon déposés sur ces détecteurs.

Comme toutes les techniques de détection du radon, les deux techniques précitées ne permettent pas d'intégrer l'effet de l'irradiation sur de longues périodes de temps, la période d'intégration ne dépassant guère quelques semaines, et elles exigent deux phases de travail :

une phase d'implantation des détecteurs ou dosimètres et une phase de récupération de ceux-ci après la période de temps nécessaire à l'intégration du flux radon.

On obtient une intégration de l'effet d'irradiation sur de longues périodes de temps en prélevant des échantillons sur le site prospecté même et en effectuant les mesures de thermoluminescence sur ces échantillons. Cette façon de procéder est illustrée par US-A-4 220 856, US-A-2 899 558 ou US-A-4 267 445, par exemple. Suivant ces documents, les mesures de thermoluminescence sont effectuées sur les échantillons tels qu'ils proviennent des prélèvements sur le site prospecté et les mesures indiquent les intensités lumineuses de thermoluminescence globales.

L'invention a pour objet un procédé de prospection de gisements radioactifs par thermoluminescence qui permet non seulement d'intégrer l'effet d'irradiation sur de longues périodes de temps, mais qui permet également de mettre en évidence les effets fossiles de migration des solutions minéralisantes et de localiser les voies de migration du radon et des produits de filiation de l'uranium.

Le procédé selon l'invention se caractérise en ce que, avant de mesurer les intensités lumineuses de thermoluminescence, les échantillons prélevés sur le site prospecté sont soumis aux opérations suivantes : sélection de grains d'échantillons dans des classes granulométriques appropriées (tamisage), extraction des phases minéralogiques thermoluminescentes significatives par un traitement des grains sélectionnés, et chauffage d'une quantité de matière extraite par gradation régulière jusqu'à 500 °C environ, après quoi la mesure des intensités lumineuses de thermoluminescence naturelle est effectuée pour différentes températures.

Pour extraire les phases minéralogiques thermoluminescentes significatives selon l'invention, on procède comme suit. Après séchage dans l'étuve à 50 °C environ, défloculation et tamisage sous eau avec maille granulométrique voulue, on procède à une attaque de l'échantillon par une solution d'acide chlorhydrique, puis on sépare les phases thermoluminescentes à l'aide d'une liqueur dense par exemple un mélange de bromoforme et de xylol et attaque à l'acide fluorhydrique.

Dans le cas de fractions granulométriques fines, par exemple des limons éoliens ou des silts, homogènes quant à leur contenu feldspathique mais généralement assez carbonatés, on procède à une attaque à l'acide chlorhydrique avant défloculation et on n'effectue pas de séparation aux liqueurs denses. Les mesures de thermoluminescence sont alors effectuées sur les grains de quartz et de feldspath de la classe sélectionnée et ensuite, après élimination des feldspaths par attaque à l'acide fluorhydrique, sur les grains de quartz obtenus.

Le procédé selon l'invention a pour avantages qu'il permet de localiser des gisements radioactifs au moyen d'une seule phase de prélèvement sur le site prospecté sans faire appel à des détecteurs ou dosimètres et qu'il permet de localiser des gisements radioactifs dits cachés, enfouis sous des formations géologiques stériles et qui ne peuvent donc être détectés par les procédés classiques faisant appel à la détection du rayonnement émis par le gisement lui-même. Ce procédé permet également de localiser des gisements de minéraux associés à de l'uranium par exemple (phosphates, terres rares, etc), l'uranium jouant alors le rôle de traceur. L'invention permet également de rechercher des voies de migration des solutions minéralisées et de savoir ainsi par où l'élément radioactif est passé et de permettre de cette façon la prospection aisée et efficace de certains types de gisements.

L'invention est exposée plus en détails dans ce qui suit avec un exemple d'application du procédé sur un site géologique illustré par les dessins ci-annexés :

- la figure 1 est une coupe géologique schématique d'un site prospecté à titre d'exemple,

- la figure 2 montre l'anomalie de thermoluminescence relevée par le procédé selon l'invention.

Le procédé selon l'invention est basé sur l'idée d'utiliser des minéraux thermoluminescents des roches comme détecteurs d'irradiation. On sait en effet que la radioactivité est l'un des principaux facteurs qui déterminent la thermoluminescence.

Celle-ci est donc un moyen de révéler l'irradiation subie par les roches desquelles migre le radon.

Ce procédé vise à mettre en évidence une variation spatiale (anomalie) de la dose de rayonnement reçue dans le passé par des formations géologiques susceptibles d'indiquer la présence en profondeur d'un gisement radioactif ou le passage (migration) de solutions enrichies en uranium.

Des échantillons de subsurface ou de forage sont prélevés sur le site prospecté après analyse préliminaire de la thermoluminescence de la roche en vue de définir des faciès de thermoluminescence, l'étude géologique du site jointe à l'étude des faciès de thermoluminescence permet de choisir la maille de prélèvement des échantillons.

On sélectionne une classe granulométrique choisie en fonction des critères pétrographiques et sédimentologiques, après broyage si l'échantillon est cohérent, puis on traite les grains sélectionnés afin d'en extraire les phases minéralogiques thermoluminescentes qui seront utilisées comme témoin d'une variation de la dose de rayonnement reçue dans le passé. Le traitement consiste à sécher les grains dans l'étuve à une température de 50 °C par exemple, afin d'éviter leur désexcitation thermique qui altérerait leurs propriétés thermoluminescentes et fausserait les résultats des mesures. Après une opération de défloculation (à l'aide de Calgon par exemple) et tamisage sous eau afin de sélectionner des grains contenus dans une classe granulométrique optimale (200-350 microns pour des gisements sédimentaires en bordure de massifs granitiques), on attaque les grains sélectionnés à l'aide d'une solution d'acide chlorhydrique pendant quelques minutes afin d'éliminer les carbonates. On sépare alors les phases minéralogiques thermoluminescentes (par exemple feldspath alcalin-quartz et plagioclases) à l'aide d'une liqueur dense (par exemple un mélange de bromoforme et de xylol) et attaque à l'acide fluorhydrique suivant une cinétique déterminée par des essais préliminaires (par exemple trois minutes pour des formations géologiques superficielles peu feldspathiques).

Dans le cas de fractions granulométriques homogènes quant à leur contenu feldspathique mais généralement assez carbonatées (par exemple des limons éoliens ou des silts), on procède à une attaque à l'acide chlorhydrique avant défloculation et on n'effectue pas de séparation aux liqueurs denses.

Les phases minéralogiques étudiées sont alors les grains de quartz et de feldspaths de la classe sélectionnée puis les grains de quartz obtenus après élimination des feldspaths par attaque à l'acide fluorhydrique. Les limons éoliens ou plus généralement tous les sédiments quaternaires qui ont subi une photodésexcitation récente à l'échelle des temps géologiques, constituent des matériaux particulièrement intéressants pour mettre en évidence les zones de migration du radon ou des produits de filiation de l'uranium grâce à la possibilité qu'ils offrent de pouvoir travailler simultanément sur tous les minéraux thermoluminescents des sédiments (par exemple quartz et feldspaths), aucun minéral n'ayant atteint la dose de saturation.

Une quantité faible de grains de la ou de chaque phase minéralogique thermoluminescente séparée est placée dans un four et chauffés suivant la loi linéaire (par exemple 1 degré par seconde) jusqu'à une température de 500 °C par exemple afin de stimuler l'émission thermoluminescente naturelle. On enregistre l'évolution de l'intensité du flux lumineux en fonction de la température (courbe de TL).

On détermine les valeurs normales régionales de thermoluminescence des formations géologiques prospectées par le traitement statistique des données provenant d'échantillons dans les formations géologiques et par comparaison, on dégage les anomalies de thermoluminescence définies par rapport aux valeurs normales régionales.

Les fortes émissions lumineuses (anomalies) indiquent des zones à dose d'irradiation plus importante que les zones avoisinantes et soulignent les zones de migration des descendants de la famille de l'uranium. De plus, certaines caractéristiques des courbes de TL (facteur de forme, par exemple) permettent de circonscrire des structures sédimentaires favorables à la migration et à l'accumulation. La localisation de ces zones de migration fournit des indices de proximité et des indications sur la genèse d'un gisement et elle permet en fin de compte de localiser un gisement caché, généralement impossible à déceler par radiométrie au sol ou par voie aéroportée.

Les intensités de thermoluminescence (TLN) peuvent être converties en unités de dose de rayonnement. Pour ce faire, on désexcite les grains d'échantillons en les soumettant à un flux d'ultraviolets et on les irradie ensuite par une source au cobalt 60, puis on mesure les intensités de thermoluminescence artificielle (TLA). Les unités de dose de rayonnement relatives sont obtenues en traçant la courbe de saturation (intensités de TLA en fonction du temps d'irradiation) et en interpolant sur cette courbe la dose correspondant à l'intensité de thermoluminescence naturelle (TLN).

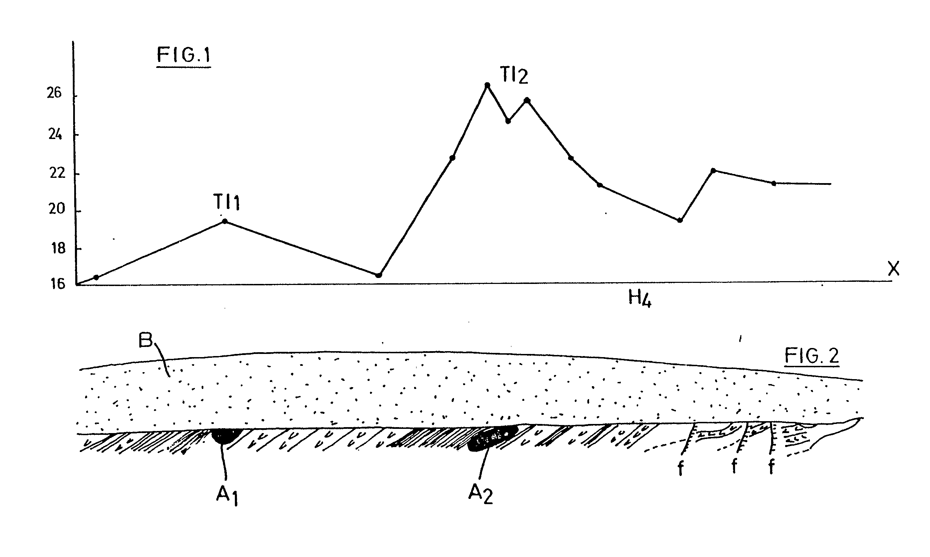

Dans un exemple d'application, le procédé selon l'invention a été appliqué en vue de la localisation sous couverture d'un gisement en cours de prospection et où certaines minéralisations enfouies ne pouvaient être mises en évidence par les méthodes radiométriques classiques. Le contexte géologique du site (figure 1) est représenté par un petit bassin sédimentaire avec remplissage de sables grossiers 1 reposant sur un socle granitique 3. Des accumulations en uranium d'intérêt économique sont localisées au sein des sables dans un chenal 2 propice à la circulation des solutions minéralisantes. Les sables de la couverture ont été échantillonnés à l'aide d'une tarière afin de se mettre à l'abri d'une zone dont la thermoluminescence est perturbée par des phénomènes de photodésexcitation et qui peut être épaisse de plusieurs mètres si les formations sableuses ont glissé sur des pentes naturelles.

Dans les échantillons prélevés à la tarière (et après défloculation et tamisage sous eau) on a sélectionné des grains dans la classe granulométrique 200-250 microns, on les a attaqués par de l'acide chlorhydrique 1/10 N pendant trente minutes, puis on a séparé les quartz et les feldspaths alcalins à l'aide d'une liqueur dense constituée d'un mélange de bromoforme et de xylol et avec attaque à l'acide fluorhydrique pendant trois minutes. Les phases minérales thermoluminescentes ainsi séparées ont été chauffées dans un four jusqu'à 400 °C par montée régulière d'un degré par seconde et on a relevé les intensités lumineuses produites à différentes températures. Ces intensités lumineuses mesurées ont été comparées à la valeur de la themoluminescence régionale constituant le bruit de fond local de thermoluminescence (background) déterminé par un échantillonnage des mêmes formations en dehors des zones anomaliques. La figure 2 ci-annexée montre l'anomalie de thermoluminescence relevée au droit des concentrations en uranium. Le procédé selon l'invention a permis de constater l'existence d'un pic d'intensité de thermoluminescence localisé au droit d'une accumulation d'uranium ultérieurement recoupée par un profil de sondages.

## Revendications

1. Procédé de prospection de gisement de minerais radioactifs par thermoluminescense, suivant lequel on prélève des échantillons sur le site prospecté et on mesure les intensités lumineuses de thermoluminescence sur ces échantillons, caractérisé en ce que, avant de mesurer les intensités lumineuses de thermoluminescense, les échantillons prélevés sont soumis aux opérations suivantes :

- sélection de grains d'échantillons dans des classes granulométriques appropriées (tamisage),

- extraction des phases minéralogiques thermoluminescentes significatives par un traitement des grains sélectionnés,

- chauffage d'une quantité de matière extraite par gradation régulière jusqu'à 500 °C environ, après quoi la mesure des intensités lumineuses de thermoluminescence naturelle est effectuée pour différentes températures.

2. Procédé selon la revendication 1, caractérisé en ce que l'opération d'extraction des phases minéralogiques thermoluminescentes significatives comprend les étapes suivantes : séchage à une température ne dépassant pas 50 °C environ, défloculation, tamisage sous eau avec maille granulométrique voulue, attaque par une solution d'acide chlorhydrique, séparation des phases thermoluminescentes à l'aide d'une liqueur dense, par exemple un mélange de bromoforme et de xylol, et attaque à l'acide fluorhydrique de la phase dense.

3. Procédé selon la revendication 1, caractérisé en ce que l'opération d'extraction des phases minéralogiques thermoluminescentes significatives comprend les étapes suivantes : séchage à une température ne dépassant pas 50 °C environ, attaque par une solution d'acide chlorhydrique, défloculation, tamisage sous eau avec maille granulométrique voulue, partage de la classe granulométrique sélectionnée en deux parties, une première partie servant directement à une mesure des intensités lumineuses de thermoluminescence et la seconde partie étant traitée à l'acide fluorhydrique, le résidu de l'attaque servant à son tour à une mesure des intensités lumineuses de thermoluminescence.

4. Procédé selon l'une quelconque des revendications 1 à 3, caractérisé en outre par les étapes suivantes :

photodésexcitation des grains par flux d'ultraviolets, irradiation par une source au cobalt 60, mesure des intensités lumineuses de thermoluminescence artificielle, et conversion des intensités lumineuses de thermoluminescence naturelle en unité de dose de rayonnement par comparaison avec la courbe de saturation.

## Claims

1. A method of prospecting radioactive ore deposits by thermoluminescence, in which samples are taken of the prospected site and the thermoluminescence light intensities are measured on these samples, characterised in that before the thermoluminescence light intensities are measured the samples are subjected to the following operations :

- Selection of sample particles in appropriate particle size classes (screening),

- Extraction of the significant thermoluminescent mineralogical phases by a treatment of the selected particles,

- Heating of a quantity of material extracted by uniform gradation up to about 500 °C, whereafter the natural thermoluminescence light intensities are measured for different temperatures.

2. A method according to claim 1, characterised in that the operation for extraction of the significant thermoluminescent mineralogical phases comprises the following steps : drying at a temperature not in excess of about 50 °C, deflocculation, underwater screening with the required particle size mesh, attack by means of a solution of hydrochloric acid, separation of the thermoluminescent phases by means of a dense liquid, e. g. a mixture of bromoform and xylene, and attack of the dense phase with hydrofluoric acid.

3. A method according to claim 1, characterised in that the operation for extraction of the significant thermoluminescent mineralogical phases comprises the following steps : drying at a temperature not in excess of about 50 °C, attack by means of a solution of hydrochloric acid, deflocculation, underwater screening with the required particle size mesh, division of the selected particle size class into two parts, a first part being used directly for measurement of the thermoluminescent light intensities and the second part being treated with hydrofluoric acid, the residue of the attack in turn being used for measurement of the thermoluminescence light intensities.

4. A method according to any one of claims 1 to 3, further characterised by the following steps : photo de-excitation of the particles by ultraviolet flux, irradiation by a cobalt 60 source, measurement of the artificial thermoluminescence light intensities, and conversion of the natural thermoluminescence light intensities into a radiation dose unit by comparison with the saturation curve.

## Patentansprüche

1. Verfahren zum Aufspüren von Ablagerungen radioaktiver Mineralien durch Thermolumineszenz, bei dem man Proben an der Untersuchungsstelle entnimmt und die Lichtintensitäten der Thermolumineszenz dieser Proben mißt, dadurch gekennzeichnet, daß die entnommenen Proben vor dem Messen der Lichtintensitäten der Thermolumineszenz den folgenden Operationen unterzogen werden :
- Wählen von Probenkörnern in geeigneten Korngrößenklassen (Sieben),
- Extraktion von thermolumineszierenden mineralogischen Phasen, die signifikant für eine Behandlung der gewählten Körner sind,
- Erwärmen einer Menge extrahierten Materials durch regelmäßige Steigerung bis ca. 500 °C, wonach das Messen der Lichtintensitäten der natürlichen Thermolumineszenz bei verschiedenen Temperaturen durchgeführt wird.

2. Verfahren nach Anspruch 1, dadurch gekennzeichnet, daß die Operation der Extraktion der signifikanten thermolumineszierenden mineralogischen Phasen die folgenden Schritte aufweist : Trocknen bei einer Temperatur, die ca. 50 °C nicht überschreitet, Entflocken, Sieben unter Wasser mit einer gewünschten KorngrößenMaschenweite, Einwirkenlassen von einer Chlorwasserstoffsäurelösung, Trennen der thermolumineszierenden Phasen mittels einer Dichteflüssigkeit, z. B. einer Mischung aus Bromoform und Xylol, und Einwirkenlassen auf die Fluorwasserstoffsäure der Dichtephase.

3. Verfahren nach Anspruch 1, dadurch gekennzeichnet, daß die Operation der Extraktion der signifikanten thermolumineszierenden mineralogischen Phasen die folgenden Schritte aufweist. : Trocknen bei einer Temperatur, die ca. 50 °C nicht von einer Chlorwasserstoffsäurelösung, Entflocken, Sieben unter Wasser mit einer gewünschten Korngrößen-Maschenweite, Teilen der gewählten Korngrößenklasse in zwei Teile, nämlich einen ersten Teil, der direkt zu einer Messung der Lichtintensitäten der Thermolumineszenz dient, und den zweiten Teil, der mit Fluorwasserstoffsäure behandelt wird, wobei der bei dem Einwirkenlassen zurückgebliebene Rest schließlich zu einer Messung der Lichtintensitäten der Thermolumineszenz dient.

4. Verfahren nach einem der Ansprüche 1 bis 3, ferner gekennzeichnet durch die folgenden Schritte : Photoentregung der Körner durch Ultraviolettfluß, Bestrahlung durch eine Kobalt-60-Quelle, Messung der Lichtintensitäten der künstlichen Thermolumineszenz, und Umwandlung der Lichtintensitäten der natürlichen Thermolumineszenz in Strahlungsdosierungseinheiten durch Vergleich mit der Sättigungskurve.

FIG.1

FIG. 2

0 178 279